# EUROPEAN PATENT SPECIFICATION

(11) **EP 0 970 792 B1**
(45) Date of publication and mention of the grant of the patent: **21.05.2003**
(21) Application number: 99202152.7
(22) Date of filing: 01.07.1999
(51) Int. Cl.: B29C 44/14

(54) **Process and apparatus for molding a plastic foam material coupled with a film, in particular to realise motor vehicle upholstery elements**
Verfahren und Vorrichtung zum Formen eines mit einer Folie beschichteten Schaumkunststoffes, insbesondere für einen Polsterkörper eines Kraftfahrzeuges
Procédé et dispositif pour le moulage d'un élément en mousse revêtu d'un film, en particulier pour fabriquer des éléments de rembourrage de véhicules automobiles

(30) Priority: 10.07.1998 IT MI981588
(43) Date of publication of application: 12.01.2000
(73) Proprietor: DEVI S.p.A., 20045 Besana Brianza (Milano) (IT)
(72) Inventor: Vismara, Mario, 22064 Casatenovo, Lecco (IT)
(74) Representative: Fusina, Gerolamo

(56) References cited:
- EP-A- 0 512 609
- DE-A- 19 704 623
- US-A- 5 273 597
- PATENT ABSTRACTS OF JAPAN vol. 1998, no. 05, 30 April 1998 (1998-04-30) & JP 10 015973 A (KANEGAFUCHI CHEM IND CO LTD), 20 January 1998 (1998-01-20)

## Description

The present invention refers to a process and to an apparatus for molding a plastic foam material coupled with a film, in particular to realise motor vehicle upholstery elements.

Currently, processes and apparatuses suitable to realise objects through the use of coupled together plastic materials with various characteristics, as a film plastic material for the surface, and a plastic foam material for the inner portion, are known, as disclosed in EP-A-0 512 609, they comprise a thermoforming stage and a molding stage; the thermoforming is realised, generally, by compressing the plastic material film between a thermoforming mold and a counter-mold to give it the desired shape, after having suitably heated the plastic material film up to a temperature close to the softening temperature. At this point, the thermoforming mold, which carries the thermoformed film, is coupled with the complementary mold for the injection of the plastic foam material; the thermoforming and the injection molds form a molding cavity wherein the plastic foam material is injected, then, said material is sintered through steam jets so as to perfectly adhere to the thermoformed film. Therefore, said process is based on the negative shape thermoforming process. The thermoforming and the molding stages use the same semimold and are, therefore, sequential. The molding cycle will be the result of the sum of each cycle, with limited possibilities of recovering time by putting forward the film preheating. The machines which realise said process have, in association with the injection mold, condensate water and cooling water collection means, means to realise the vacuum in the molding cavity and ejecting means to discharge the molded parts; said means, known from the previous art, will not be further described.

The thermoforming/coupling machines according to the known art are mainly used when it is possible to use the negative shape thermoforming process, wherein the film is thermoformed directly inside the mold and the mold shape coincides with the desired shape of the final product, with the most important side, i.e. the one which will be on sight, in contact since the beginning with the mold surface, said side will not be removed from the mold until after the plastic foam material has been molded, at the ejection of the finished part.

However, the known process has some disadvantages, mostly due to the fact that the production time is long, being the result of the sum of the thermoforming, transfer and molding cycle times, with limited time recovery of the film preheating phase during the thermoforming cycle.

Further, the negative shape thermoforming technique does not allow, often, to realise products which have an outer surface with a sufficient thickness and quality in the most projecting portions; in fact, the most projecting portions of the finished part are the ones wherein, in the negative shape thermoforming process, the film is more stretched and the ones which, usually, being the most exposed and the most on sight, have to show the best characteristics.

Further, inside the molding cavity of the machine which realises said process, a certain amount of water is usually collected due to the condensation of the steam injected for sintering the foam material and to the water residues of the cooling cycle; this amount of water is a big trouble factor and it causes quality problems and, often, high levels of scraps since it is difficult to eliminate even through specific devices.

Further, when it is necessary to apply inserts to be molded together with the foam material, their positioning is extremely difficult: in fact, the injection semimold, wherein said inserts should be placed, is facing downward and, therefore, it is not easy to reach.

A purpose of the present invention is to eliminate the above disadvantages, through the realisation of a process and of an apparatus for molding a plastic foam material coupled with a film, in particular to realise motor vehicle upholstery elements, which allow to obtain finished products with better surface quality on the side coated with the thermoformed film.

Another purpose of the invention is to realise a process and an apparatus to obtain a substantial reduction of the time lenght of manufacturing cycle.

A further purpose of the invention is to realise a process and an apparatus to place, in an easier way, inserts on the foam side.

A further purpose of the invention is to realise a process and an apparatus to discharge, without any specific device, but just by the action of the gravity force, the condensate water of the steam needed for the sintering process and of the cooling water of the molding area.

Last but not least purpose of the invention is to realise a simple, safe and more reliable process and apparatus with respect to the known art.

These and other purposes, according to the present invention, are reached by realising a process for molding a plastic foam material coupled with a film, in particular to realise motor vehicle upholstery elements, according to claim 1, which is taken as reference for brevity sake.

In order to realise said process according to the invention, there is provided an apparatus for molding a plastic foam material coupled with a film, in particular to realise motor vehicle upholstery elements, according to claim 6, which is taken as reference for brevity sake.

Advantageously, the process and the apparatus according to the invention allow to obtain products made of coated foam materials, as, for instance, motor vehicles upholstery elements, through a thermoforming process of a film with one or more layers, said film has the inner layer made of a material chemically similar to the outer plastic material, and through a molding process of the plastic foam material thereon in order to realise a perfect adhesion.

For instance, for what it concerns the realisation of motor vehicles upholstery elements, having, as the foam phase, foam polypropylene, the film can be one of the following types (the type list is given as a non limiting example):
- single layer: polypropylene as a film;
- double layer: polypropylene as a film on the outer portion (with an aesthetic function) and extruded polypropylene as a foam inside the inner portion in order to obtain soft and smooth (to the touch) surfaces ("soft-touch" effect);
- fabric on the outer portion (with an aesthetic function) coupled with a double layer film: the layer in contact with the fabric is made of polyamide or polyester, the layer in contact with the plastic foam material is made of polypropylene. The function of the polyamide (or polyester) layer is to avoid that the surface defects of the foam material show up on the fabric. In fact, the polyamide has a higher softening temperature than the polypropylene and, as a consequence, at the sintering and welding temperature of the polypropylene, the polyamide layer maintains a sufficient stiffness to avoid its deformation (and consequently also the fabric deformation) along the grain boundaries of the polypropylene material. The function of the polypropylene layer is to allow the welding between the film and the foam material;
- as the above type, with an additional layer of polyurethane foam placed between the fabric and the double layer film, in order to obtain soft and smooth (to the touch) surfaces ("soft-touch" effect).

The characteristics and the advantages of a process and of an apparatus for molding a plastic foam material coupled with a film, in particular to realise motor vehicle upholstery elements, according to the present invention, will become more evident from the following description of a non limiting example, with reference to the attached schematic drawings, in which:
Figure 1 is a schematic view of the apparatus according to the invention during a first working phase;
Figure 1A is a plan view of the apparatus of figure 1 during the molding phase of an motor vehicle door wherein the film heating lamps are not working;
Figure 2 is a schematic view of the apparatus according to the invention during a second working phase;
Figure 3 is a schematic view of the apparatus according to the invention during a third working phase;
Figure 4 is a schematic view of the apparatus according to the invention during a fourth working phase.

With reference to the above figures, there is shown an apparatus 1 for molding a coupled plastic material, in particular to realise motor vehicle upholstery elements. The apparatus 1 comprises a thermoforming stage 2, a molding stage 3 and a discharge stage 4 and guide rolls 23 to feed a film 28.

Heating means 27 are placed adjacent to the guide rolls 23 of the film 28 so that, before the thermoforming phase, said means can be moved horizontally to a position parallel to the film 28, above and below said film at independent times, in order to heat said film and to bring it to a temperature close to the softening temperature (120-160°C for propylene). Said heating means 27 are preferably made of a plurality of infrared ray lamps, each one of which can be independently adjusted; said lamps can reach a temperature equal to 280-400°C and, besides horizontally, can be moved also vertically. It will then be possible to heat the film in different ways with respect to the lamp exposure time, to the lamps temperature, to differently heated zones of the lamps, to the distance of the lamps from the film, to the use of the top or of the bottom lamps.

The two sides of the film 28 can therefore be advantageously heated to different temperature values.

In a non limiting example of a preferred embodiment, the thermoforming stage 2 comprises supporting columns 16 whereto a first platform 15 is slidably connected through a first series of seats 17. The platform 15 has a second series of seats 13 wherein cylindrical guides 11, connected to a positive shape thermoforming mold 10, can slide. It is possible to create the vacuum inside the chamber (or bell) of the mold 10 in order to allow the thermoforming of the film 28, or it is possible to introduce compressed air in order to allow the transfer of a thermoformed film 9a from the mold 10 to the upper injection semimold 52, as specified hereinafter.

Driving devices 19 are provided together with the mold 10 and the platform 15, said devices are formed, in particular, by a piston 20, connected to the mold 10, which is linked to a cylinder 21, which, in turn, is connected to the platform 15; the piston 20 is hydraulically driven by a fluid coming through ducts not shown in the figure. The mold 10 can be moved with respect to the first platform 15 since it can slide along the cylindrical guides 11 inside the seats 13 thanks to the piston 20 action. The first platform 15 can be moved vertically when driven by a couple of articulated systems 30, which comprise a first rod 33 rotatably connected to a base platform 70 and to a second rod 34, rotatably connected to the platform 15.

The rods 33, 34 have the same dimensions and connection rotating pins 32 between the two rods 33, 34 are also provided, and are connected by a further transversal rod 31 which allows the synchronised movement of the rods 33, 34 and therefore a vertical correct movement of the platform 15.

The upper area of the thermoforming stage 2 has a second platform 35, removably connected to the supporting columns 16, for example by means of the threaded elements 36. The handling means 37 are connected to the platform 35, said means are formed, particularly, by a hydraulic cylinder 38 to which a piston 39 and a third platform 41 are associated. The piston 39 is free to slide inside a hole 40 formed on the platform 35, in order to move, by vertical translation, the platform 41. On the platform 41 a thermoforming counter-mold 5 is fixed by the connection means 43, wherein a working shaped area 45, having a conjugated profile with respect to the mold 10, is connected to the lower portion of the platform 41. Further, attached to the counter-mold 5, a die cutter 90 is provided to cut the film 28.

The molding stage 3 comprises the supporting columns 48, to the upper ends whereof a fourth platform 47 is movably connected, by the threaded elements 49. A fifth platform 50 is connected to the lower side of the fourth platform through sliding connection elements, whereon an upper injection semimold 52 and clamping and discharge means 7 of a finished part 9 are located. The platform 50 can move horizontally to allow the drawing of the thermoformed film 9a from the thermoforming mold 10 to the upper injection semimold 52 and, further, to allow the discharge of the finished part 9 by the clamping and discharge means 7.

The temperature of the upper injection semimold 52 is adjusted by thermal conditioning devices ( e.g. by serpentines wherein steam circulates) and by control devices (thermostat) 12, so as to correctly treat the thermoformed film 9a during the transfer from the thermoforming stage 2 to the molding stage 3. This is preferable since the semimold 52 has to be taken at an appropriate temperature before receiving the thermoformed film 9a, in order to avoid the undesired shrinkage of the film 9a itself.

Further, in a chamber (or bell) relative to semimold 52 it is possible to create a vacuum to allow to pick up the thermoformed film 9a from the mold 10, or to let in compressed air to allow the delivery of a finished part 9 on the lower injection semimold 61.

In a lower area of the mold stage 3, the apparatus has a further platform 57 whereon the lower injection semimold 61 is located.

The upper semimold 52, with the thermoformed film 9a inside, and the lower semimold 61 form a chamber mold 80, wherein the plastic foam material 9b is injected by the injectors 58.

The plastic foam material 9b is then sintered and sealed to the thermoformed film by the use of steam, and it is injected in the mold chamber 80 through nozzles (not shown in the figure) which are present on the lower injection mold 61.

A further innovative characteristic of the apparatus according to the invention is the presence, at the level of the bell which supports the semimold 61, of double independent circuits to feed steam, vacuum, air and water and the division of the bell in two or more portions, which are connected alternatively to one of said two independent circuits of steam, vacuum, air, and water. Therefore, the sintering cycle could use several options to apply steam and vacuum impulses on several portions of the mold, so as to obtain an optimum melt of the beats and of the film, whatever the shape and thickness of the molding part are.

Further, on the above mentioned bell of the semimold 61, it is possible to create a vacuum, so as to accelerate the cooling of the foam material and to facilitate the removal of the steam condensate water and of the cooling water, or to let in compressed air to allow the delivery of the finished part 9 and its removal by the clamping and discharge means 7.

The injection of the plastic foam material 9b in the chamber 80 occurs from the bottom to the top, the injectors 58 being movably connected to the platform 57 and to the lower semimold 61.

The platform 57 has, further, cylindrical housings 55 which allow the sliding connection of said platform to the supporting columns 48 in order to allow transverse movements of the platform 57.

The discharge stage 4 comprises clamping and discharge means 7 formed, for example, by suction cup means (64), suitable to grasp the finished part 9 and to carry it outside the apparatus in order to deposit it, for example, on a conveyor belt 65.

The functioning of the apparatus is substantially the following.

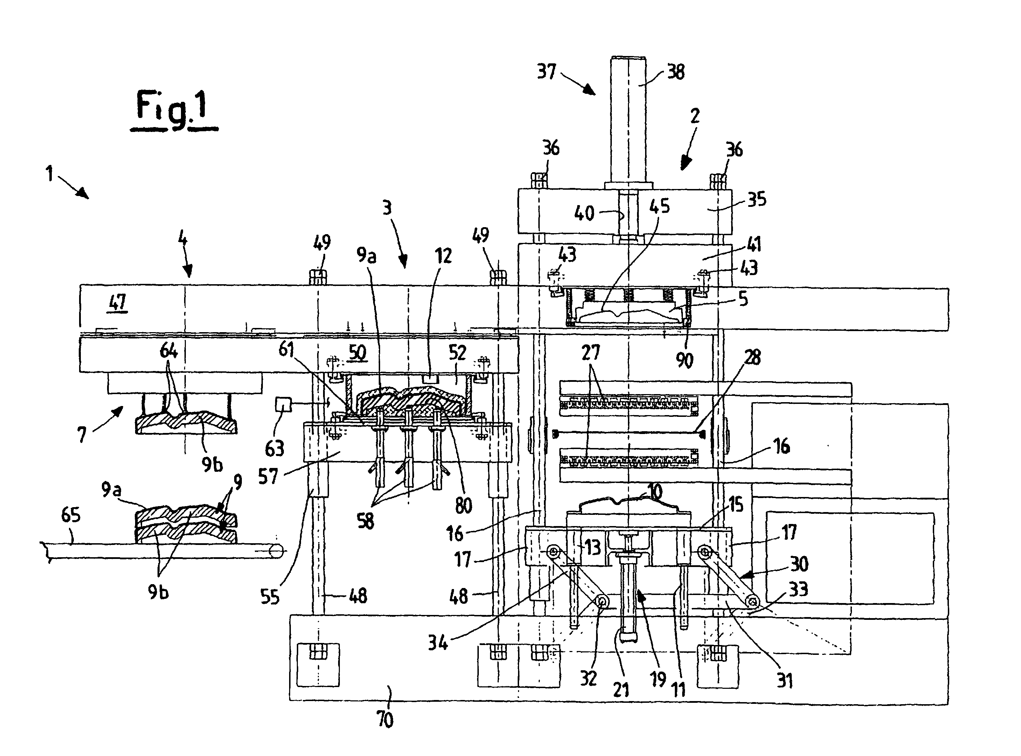

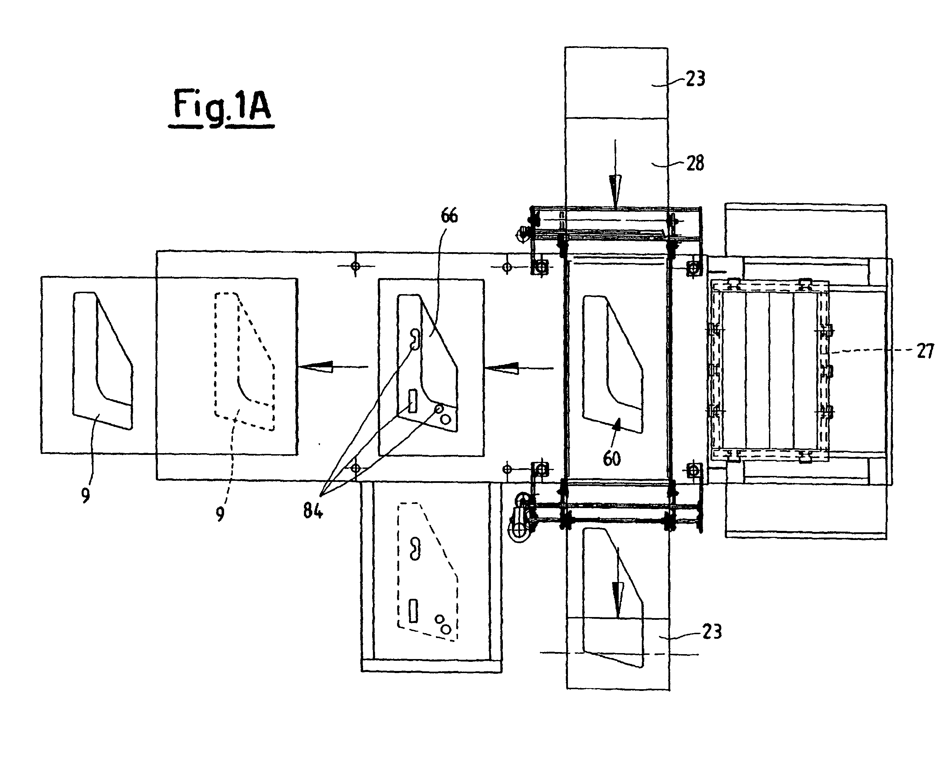

In particular, referring to figure 1, during a first phase the heating lamps 27 bring a portion of the film 28 to a temperature close to the softening temperature, while the counter-mold 5 and the thermoforming mold 10 are respectively in a higher and in a lower position with respect to the film 28. Simultaneously, during the molding stage 3 the sintering of the plastic foam material 9b and its sealing with the thermoformed film 9a occur, while, during the discharge stage 4, the finished part 9 is discharged on the conveyor belt 65.

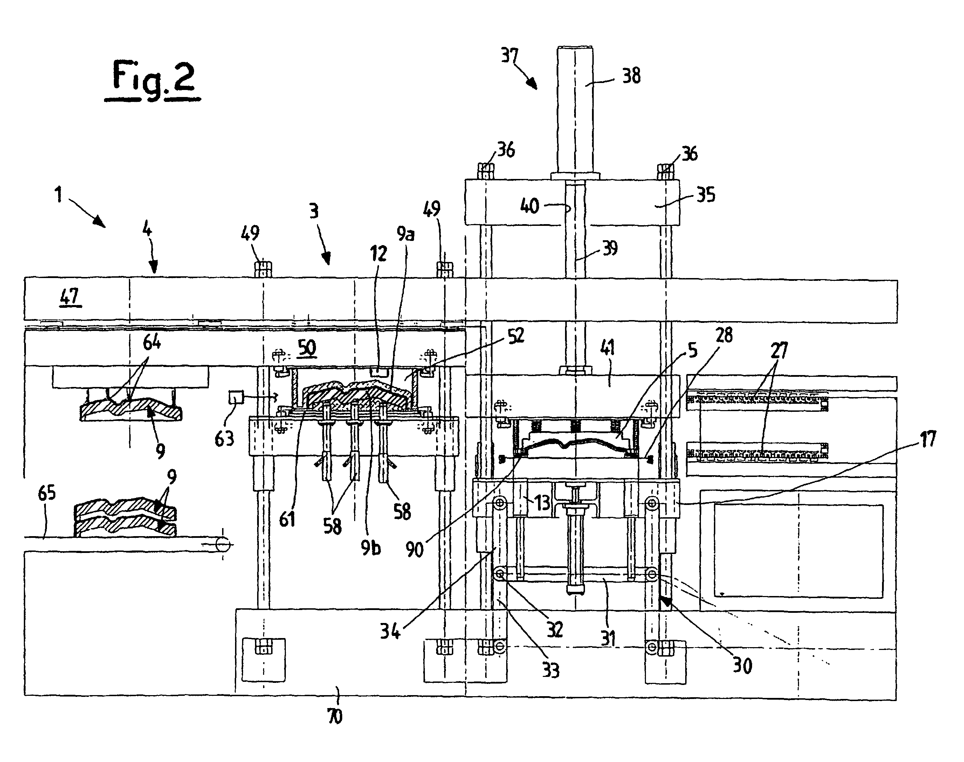

In Figure 2 the film 28 thermoforming phase is shown, wherein the heating lamps 27 are withdrawn and the thermoforming mold 10 and the counter-mold 5 translate vertically until they are coupled together.

The mold 10 is heated at an appropriate temperature, according to the typical characteristics of the material and to the consistency of the film 28.

In the chamber of the mold 10 a depression is created so as to, through the holes obtained on the mold (not shown in the figure), the film 28 sticks perfectly thereon.

After an appropriate period of time, the die cutter 90, which is integral with the mold 5, cuts the film 28 along the edge of the thermoformed area.

According to an alternative embodiment, the thermoforming process can be aided by using, instead of the shaped counter-mold, a chamber positioned above the thermoforming mold 10, defined in the lower part by the mold 10 itself and containing the die cutter 90, wherein compressed air is introduced so as to allow an optimum and uniform adherence of the film 28 on the mold 10.

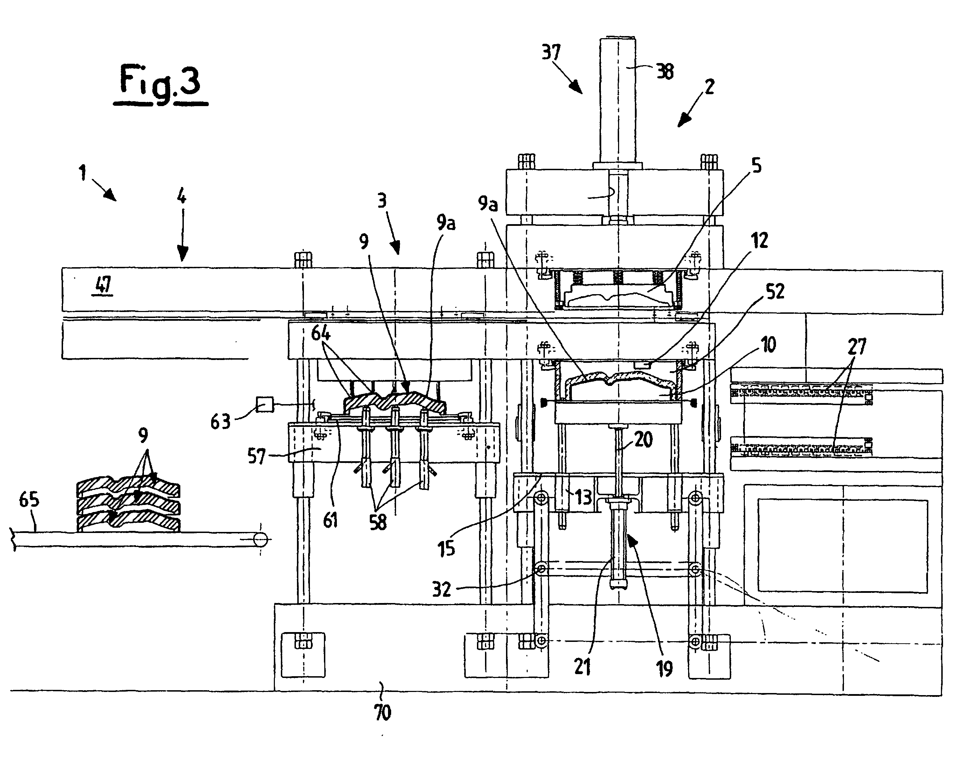

In figure 3 the counter-mold 5 has returned to its initial position while in the molding stage 3 the sintering and the welding phases are finished; the finished part 9 is delivered and deposited on the lower injection semimold 61. The platform 57 is lowered and has disengaged the upper injection semimold 52. The platform 50 has therefore been translated and the upper injection semimold 52 has been transferred from the mold stage 3 to the thermoforming stage 2 and the suction cup means 64 from the discharge stage 4 to the molding stage 3. The thermoforming mold 10 is translated vertically, through the handling system formed by the piston 20 and by the cylinder 21, with respect to the platform 15, until it is coupled with the upper injection semimold 52. At this point the thermoformed film 9a is transferred from the thermoforming mold 10 to the upper injection semimold 52; this transfer is realised by pressurising the chamber of the mold 10 and by creating, in the same time, a depression in the chamber of the upper injection semimold 52.

In the meantime, the platform 57 is lifted until it contacts the suction cup elements 64 and the finished part 9; the transfer of the finished part is substantially obtained in the same way the thermoformed film 9a transfer is performed, i.e. by pressurising the chamber of the bottom injection semimold and by creating a depression at the suction cup elements 64.

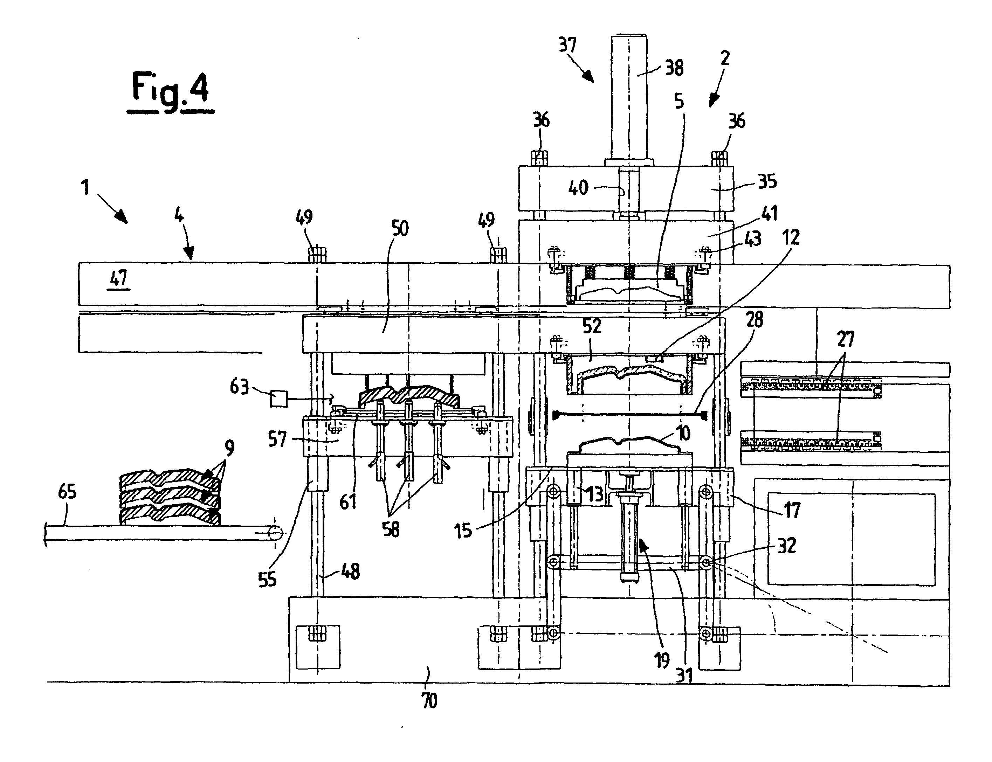

In figure 4, the thermoforming mold 10 has been lowered and it is gone back to abut against the platform 15. The film handling system can, therefore, proceed by discharging the scraps from the apparatus and by feeding a new portion of film 28 to the thermoforming mold 10 and to the thermoforming counter-mold 5.

The following operations are performed between the stages shown in the figures 4 and 1 respectively:
- the platform 57 is lowered in order to allow the transverse movement of the platform 50 and, therefore, the transfer of the upper injection semimold 52, whereon the thermoformed film 9a is placed, from the thermoforming stage 2 to the molding stage 3; the suction cup elements 64 carry the finished part 9 (realised during the previous cycle) to the apparatus outlet;
- while the upper injection semimold 52 and the bottom injection semimold 61 are separated, a handling device 63 provides to position the inserts 84 on the bottom injection semimold 61, which is easy to reach because it faces upward. Alternatively, the inserts 84 can be manually positioned by an operator. The inserts 84, formed, for instance by separate elements in order to facilitate the subsequent assembly of the finished part 9, have generally an operational function and are not necessarily on sight, since, after the molding operation, they are immersed in the plastic foam material 9b.
- the platform 57 is lifted until the two injection semimolds (upper and lower mold) are coupled: at this point the plastic foam material 9b can be loaded into the chamber 80 thus starting the molding cycle;
- the platform 15 is lowered to allow the heating lamps 27 to move transversally until they reach the working position (heating the film).

In practice, the apparatus according to the invention is particularly advantageous mainly for the specific applications of the finished parts 9 obtained as mentioned above. First of all, the steam, injected through the nozzles into the molding chamber 80, by condensing on the mold, does not accumulate in areas or in cavities of the finished part 9, as it could happen in the case of the known molding technique wherein the raw material and the steam injection is realised in the injection mold which is in a higher position with respect to the thermoforming mold. In the case of the apparatus according to the process of the present invention, the condensate and the cooling water flow naturally downward by effect of the gravity force.

Further, the manufacturing times are significantly reduced; in fact, the thermoforming stage and the molding stage do not have molds in common, but are conducted separately. Since the two stages are not in sequence, the cycle time will result to be equal to the longest stage plus the short period of time needed to move transversally and to transfer the thermoformed film from the thermoforming mold 10 to the upper injection semimold 52. The apparatus has, therefore, an efficiency much higher than the one attainable by the known technology wherein the stages are in sequence.

A further advantage is that the film portions which are projecting in the final product are the first to come into contact with the thermoforming mold 10 and therefore the film is less stretched in these areas, and the projecting areas are the ones wherein a better finishing and an increased thickness are required, since they are more exposed to the sight and to the wear.

Further, with respect to the known art, it is possible to work more easily in order to obtain more complex finished parts, for instance by providing to simply position the inserts 84 or other means on the bottom injection semimold 61. In fact, the accessibility and the fastening to the semimold 61 is facilitated, since said mold faces upward.

The inserts 84 can have different chemical properties with respect to the plastic foam material 9b, in which case they are fixed to the finished part 9 purely by mechanical means.

In a first preferred embodiment, said inserts 84 are instead made of material chemically similar to the plastic foam material 9b: in this case, during the subsequent steam molding phase, said inserts adhere by physical welding to the foam material, and are, in fact, included into as well as an integral portion of the finished part 9.

In this way, according to a non limiting example of a preferred embodiment, it is possible to use the finished parts 9 as inner parts 66 of motor vehicles, of sport article components, of furnishings articles and components, of load pallets and, generally, of containers.

The so conceived apparatus can be modified and changed in several ways, without departing from the invention as defined in the appended claims ; in particular, all the details can be substituted by technically equivalent elements.

In practice, the material which are used as well as the dimensions can be freely selected according to the technical needs.

## Claims

1. Process for molding a plastic foam material coupled with a film, in particular to realise motor vehicle upholstery elements, said process being cyclic and each manufacturing cycle including at least a thermoforming phase with a film (28) in a thermoforming stage (2) and a molding phase with a plastic foam material (9b) coupled with the thermoformed film (9a) in a molding stage (3), wherein said thermoforming phase of a given cycle is realized simultaneously with said molding phase of the preceding cycle, each cycle further including a transfer phase of said thermoformed film (9a) from said thermoforming stage (2) to said molding stage (3), said thermoforming stage (2) having at least a thermoforming mold (10) suitable to be joined, by interposing said film (28), to a thermoforming counter-mold (5), and said molding stage (3) having at least an upper injection semimold (52), which defines, when it is coupled with a bottom injection semimold (61), a molding chamber (80), wherein the sintering of the plastic foam material (9b) is realised and said transfer phase comprising picking up said thermoformed film (9a) by means of the upper injection semimold (52) connected to a first platform (50) which moves from said thermoforming stage (2) to said molding stage (3).

2. A process as claimed in claim 1, **characterised in that** a phase of application of inserts (84) in said bottom injection semimold (61) is provided, before said molding phase with said plastic foam material (9b).

3. A process as claimed in claim 1, **characterised in that** said film (28) is made of a fabric coupled with a double layer film, which has a first layer, in contact with the fabric, formed by a polyamide or polyester film, and a second layer, in contact with said plastic foam material (9b), formed by a film of material chemically similar to said foam material (9b).

4. A process as claimed in claim 3, **characterised in that** a foam layer made of polyurethane foam is placed between said fabric and said double layer film.

5. A process as claimed in claim 1, **characterised in that** said thermoforming counter-mold (5) is suitable to be coupled with said thermoforming mold (10), through handling means (37), which allow a vertical movement.

6. Apparatus (1) for molding a plastic foam material coupled with a film, in particular to realise motor vehicle upholstery elements, according to the process as claimed in claim 1, comprising at least a thermoforming stage (2) and a molding stage (3), said thermoforming stage (2) having at least a thermoforming mold (10) suitable to be joined, by interposing said film (28), to a thermoforming counter-mold (5), and said molding stage (3) having at least an upper injection semimold (52), which defines, when it is coupled with a bottom injection semimold (61), a molding chamber (80), wherein the sintering of the plastic foam material (9b) is realised, said apparatus further comprising a first platform (50) which can be moved from said thermoforming stage (2) to said molding stage (3) and vice-versa, whereto said upper injection semimold (52) is connected, in order to allow to pick up and to transfer said thermoformed film (9a) from said thermoforming stage (2) to said molding stage (3).

7. Apparatus (1) as claimed in claim 6, **characterised in that** said thermoforming mold (10) is coupled with at least one second platform (15) by means of driving means (19) or articulated systems (30) suitable to translate said second platform (15) or said thermoforming mold (10) along a vertical plane.

8. Apparatus (1) as claimed in claim 6, **characterised in that** said apparatus (1) further comprises one or more independent heating means (27) of said film (28), said heating means (27) translating from a rest position outside said thermoforming stage (2) to a working position inside said stage (2).

9. Apparatus (1) as claimed in claim 6, **characterised in that** said apparatus (1) further comprises clamping and discharge means (7) of finished products (9), which include a plurality of suction cup means (64), suitable to pick up said finished products (9) and to discharge them outside the apparatus (1).

10. Apparatus (1) as claimed in claim 6, **characterised in that** said apparatus (1) further comprises injectors (58), injecting said plastic foam material (9b), which are coupled with said bottom semimold (61), so that the sintering will be located in a lower area adjacent to said thermoformed film (9a), so that the condensate of the sintering steam and the process cooling water leave the molding area autonomously thanks to the gravity force.

## Patentansprüche

1. Verfahren zum Formen eines Kunststoffschaummaterials, das mit einem Film gekoppelt wird, insbesondere um Polsterelemente eines Kraftfahrzeugs zu realisieren, wobei das Verfahren zyklisch ist und jeder Herstellungszyklus mindestens eine Warmformungsphase mit einem Film (28) in einer Warmformungsstufe (2) und eine Gussformungsphase mit einem Kunststoffschaummaterial (9b), das mit dem warmgeformten Film (9a) gekoppelt wird, in einer Gussformungsstufe (3) umfasst, wobei die Warmformungsphase eines gegebenen Zyklus gleichzeitig mit der Gussformungsphase des vorhergehenden Zyklus realisiert wird, wobei jeder Zyklus ferner eine Überführungsphase des warmgeformten Films (9a) von der Warmformungsstufe (2) zu der Gussformungsstufe (3) umfasst, wobei die Warmformungsstufe (2) mindestens eine Warmformungsform (10) aufweist, die über Anordnen des Films (28) dazwischen mit einer Warmformungsgegenform (5) zusammengefügt werden kann, und die Gussformungsstufe (3) mindestens eine obere Spritzgusshalbform (52) aufweist, die, wenn sie mit einer unteren Spritzgusshalbform (61) gekoppelt wird, eine Gussformkammer (80) definiert, in der das Sintern des Kunststoffschaummaterials (9b) realisiert wird, und wobei die Überführungsphase umfasst, dass der warmgeformte Film (9a) mittels der oberen Spritzgussform (52) aufgenommen wird, die mit einer ersten Plattform (50) verbunden ist, die sich von der Warmformungsstufe (2) zu der Gussformungsstufe (3) bewegt.

2. Verfahren nach Anspruch 1, **dadurch gekennzeichnet, dass** eine Phase einer Anwendung von Einsätzen (84) in der unteren Spritzgusshalbform (61) vor der Gussformungsphase mit dem Kunststoffschaummaterial (9b) vorgesehen wird.

3. Verfahren nach Anspruch 1, **dadurch gekennzeichnet, dass** der Film (28) aus einem Gewebe hergestellt wird, das mit einem Doppelschichtfilm gekoppelt wird, der eine erste Schicht aufweist, die in Kontakt mit dem Gewebe steht und aus einem Polyamid- oder Polyesterfilm gebildet wird, und eine zweite Schicht aufweist, die in Kontakt mit dem Kunststoffschaummaterial (9b) steht und aus einem Film aus einem Material gebildet wird, das chemisch ähnlich wie das Schaummaterial (9b) ist.

4. Verfahren nach Anspruch 3, **dadurch gekennzeichnet, dass** eine Schaumschicht, die aus Polyurethanschaum hergestellt wird, zwischen dem Gewebe und dem Doppelschichtfilm angeordnet wird.

5. Verfahren nach Anspruch 1, **dadurch gekennzeichnet, dass** die Warmformungsgegenform (5) mit der Warmformungsform (10) über Handhabungsmittel (37), die eine vertikale Bewegung zulassen, gekoppelt werden kann.

6. Vorrichtung (1) zum Formen eines Kunststoffschaummaterials, das mit einem Film gekoppelt ist, insbesondere um Polsterelemente eines Kraftfahrzeugs zu realisieren, gemäß dem Verfahren nach Anspruch 1, mit mindestens einer Warmformungsstufe (2) und einer Gussformungsstufe (3), wobei die Warmformungsstufe (2) mindestens eine Warmformungsform (10) aufweist, die über Anordnen des Films (28) dazwischen mit einer Warmformungsgegenform (5) zusammengefügt werden kann, und die Gussformungsstufe (3) mindestens eine obere Spritzgusshalbform (52) aufweist, die, wenn sie mit einer unteren Spritzgusshalbform (61) gekoppelt ist, eine Gussformkammer (80) definiert, in der das Sintern des Kunststoffschaummaterials (9b) realisiert wird, wobei die Vorrichtung ferner eine erste Plattform (50) umfasst, die von der Warmformungsstufe (2) zu der Gussformungsstufe (3) und umgekehrt bewegt werden kann und mit der die obere Spritzgusshalbform (52) verbunden ist, um zuzulassen, dass der warmgeformte Film (9a) von der Warmformungsstufe (2) aufgenommen und zu der Gussformungsstufe (3) überführt werden kann.

7. Vorrichtung (1) nach Anspruch 6, **dadurch gekennzeichnet, dass** die Warmformungsform (10) mit mindestens einer zweiten Plattform (15) mittels Antriebsmitteln (19) oder Gelenksystemen (30) gekoppelt ist, die die zweite Plattform (15) oder die Warmformungsform (10) entlang einer vertikalen Ebene umsetzen können.

8. Vorrichtung (1) nach Anspruch 6, **dadurch gekennzeichnet, dass** die Vorrichtung (1) ferner ein oder mehrere unabhängige Heizmittel (27) für den ersten Film (28) umfasst, wobei das Heizmittel (27) aus einer Ruhestellung außerhalb der Warmformungsstufe (2) in eine Arbeitsstellung innerhalb der Stufe (2) verfährt.

9. Vorrichtung (1) nach Anspruch 6,
**dadurch gekennzeichnet, dass** die Vorrichtung (1) ferner Klemm- und Austragsmittel (7) für fertig gestellte Produkte (9) umfasst, die mehrere Saugnapfmittel (64) aufweisen und die die fertig gestellten Produkte (9) aufnehmen und diese aus der Vorrichtung (1) heraus austragen können.

10. Vorrichtung (1) nach Anspruch 6,
**dadurch gekennzeichnet, dass** die Vorrichtung (1) ferner Einspritzvorrichtungen (58) umfasst, die das Kunststoffschaummaterial (9b) einspritzen und die mit der unteren Gusshalbform (61) gekoppelt sind, so dass das Sintern in einem unteren Bereich neben dem warmgeformten Film (9a) stattfinden wird, so dass das Kondensat des Sinterdampfes und das Prozesskühlwasser den Gussformungsbereich aufgrund der Schwerkraft von sich aus verlassen.

## Revendications

1. Procédé pour le moulage d'un matériau en mousse plastique couplé à un film, en particulier pour réaliser des éléments de rembourrage de véhicules automobiles, ledit procédé étant cyclique et chaque cycle de fabrication comprenant au moins une phase de thermoformage avec un film (28) dans un site de thermoformage (2) et une phase de moulage avec un matériau en mousse plastique (9b) couple au film thermoformé (9a) dans un site de moulage (3), dans lequel ladite phase de thermoformage d'un cycle donné est réalisée simultanément avec ladite phase de moulage du cycle précédent, chaque cycle comprenant de plus une phase de transfert dudit film thermoformé (9a) depuis ledit site de thermoformage (2) jusqu'audit site de moulage (3), ledit site de thermoformage (2) ayant au moins un moule de thermoformage (10) pouvant être réuni, en intercalant ledit film (28), à un contre moule de thermoformage (5), et ledit site de moulage (3) ayant au moins un semi-moule d'injection supérieur (52), qui défiait, lorsqu'il est accouplé à un semi-moule d'injection inférieur (61), une chambre de moulage (80), dans laquelle est réalisé le frittage du matériau en mousse plastique (9b), et ladite phase de transfert comprenant le prélèvement dudit film thermoformé (9a) au moyen du semi-moule d'injection supérieur (52) raccordé à une première plate-forme (50) qui se déplace dudit site de thermoformage (2) audit site de moulage (3).

2. Procédé selon la revendication 1, **caractérisé en ce qu'**il est prévu une phase d'application d'inserts (84) dans ledit semi-moule d'injection inférieur (61) avant ladite phase de moulage avec ledit matériau en mousse plastique (9b).

3. Procédé selon la revendication 1, **caractérisé en ce que** ledit film (28) est réalisé à partir d'un tissu couplé avec un film à double couche, qui comporte une première couche, en contact avec le tissu, formé d'un film de polyester ou polyamide, et une seconde couche, en contact avec ledit matériau de mousse plastique (9b), formé par un film de matériau chimiquement similaire au dit matériau de mousse (9b).

4. Procédé selon la revendication 3, **caractérisé en ce qu'**une couche de mousse réalisée en mousse de polyuréthane est placée entre ledit tissu et ledit film à double couche.

5. Procédé selon la revendication 1, **caractérisé en ce que** ledit contre moule de thermoformage (5) peut être accouplé audit moule de thermoformage (10), par des moyens de manutention (37) qui permettent un mouvement vertical.

6. Appareil (1) pour le moulage d'un matériau de mousse plastique couplé avec un film, en particulier pour réaliser des éléments de rembourrage de véhicules automobiles, selon le procédé de la revendication 1, comprenant au moins un site de thermoformage (2) et un site de moulage (3), ledit site de thermoformage (2) comportant au moins un moule de thermoformage (10) pouvant être réuni, en intercalant ledit film (28), à un contre moule de thermoformage (5), et ledit site de moulage (3) comportant au moins un semi-moule d'injection supérieur (52), qui définit, lorsqu'il est accouplé à un semi-moule d'injection inférieur (61), une chambre de moulage (80), dans laquelle est réalisé le frittage du matériau de mousse plastique (9b), ledit appareil comprenant de plus une première plate-forme (50) qui peut être déplacée depuis ledit site de thermoformage (2) jusqu'audit site de moulage (3) et vice-versa, à laquelle est raccordé le semi-moule d'injection supérieur (52) pour permettre le prélèvement et le transfert dudit film thermoformé (9a) dudit site de thermoformage (2) audit site de moulage (3).

7. Appareil (1) selon la revendication 6, **caractérisé en ce que** ledit moule de thermoformage (10) est accouplé à au moins une seconde plate-forme (15) par le biais de moyes d'entraînement (19) ou de systèmes articulés (30) pouvant translater ladite seconde plate-forme (15) ou ledit moule de thermoformage (10) le long d'un plan vertical.

8. Appareil (1) selon la revendication 6, **caractérisé en ce que** ledit appareil (1) comprend de plus un ou plusieurs moyens indépendants de chauffage (27) du film (28), lesdits moyens de chauffage (27) translatant depuis une position de repos à l'extérieur dudit site de thermoformage (2) jusqu'à une position de travail à l'intérieur dudit site (2).

9. Appareil (1) selon la revendication 6, **caractérisé en ce que** ledit appareil (1) comprend de plus des moyens de bridage et de décharge (7) de produits finis (9), qui comprennent une pluralité de moyens de ventouses d'aspiration (64) aptes à prélever lesdits produits finis (9) et à les décharger à l'extérieur de l'appareil (1).

10. Appareil (1) selon la revendication 6, **caractérisé en ce que** ledit appareil (1) comprend de plus des injecteurs (58), injectant ledit matériau de mousse plastique (9b), qui sont accouplés au dit semi-moule inférieur (61) de sorte que le frittage sera situé dans une zone inférieure contiguë au dit film thermoformé (9a) afin que le condensat de la vapeur de frittage et l'eau de refroidissement du procédé quittent d'eux-mêmes la zone de moulage sous l'effet de la force de gravité.
